(19)

Europäisches Patentamt

European Patent Office

Office européen des brevets

(11) **EP 4 535 217 A1**

(12) **EUROPEAN PATENT APPLICATION**

(43) Date of publication:
**09.04.2025 Bulletin 2025/15**

(21) Application number: **24204862.7**

(22) Date of filing: **05.10.2024**

(51) International Patent Classification (IPC):
**G06F 30/23** (2020.01)  **G05B 19/4065** (2006.01)
**G06F 30/17** (2020.01)  **G06Q 10/20** (2023.01)
**G06F 119/04** (2020.01)  **G06T 17/20** (2006.01)
**G06F 111/04** (2020.01)  **G06F 119/02** (2020.01)
**G06F 119/14** (2020.01)  **G05B 19/406** (2006.01)

(52) Cooperative Patent Classification (CPC):
**G06F 30/23; G06F 30/17; G06Q 10/20;**
G06F 2111/04; G06F 2119/02; G06F 2119/04;
G06F 2119/14; G06T 17/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.10.2023  US 202363588476 P**
**23.08.2024  US 202418813755**

(71) Applicant: **Dassault Systèmes Americas Corp.**
**Waltham, MA 02451 (US)**

(72) Inventors:
• **Vijalapura, Prashanth Kumar**
  **Walpole, 02081 (US)**
• **Harkness, Harrington Hunter**
  **Canton, 02021 (US)**
• **Xing, Junwei**
  **East Greenwich, 02818 (US)**

(74) Representative: **Bandpay & Greuter**
**11 rue Christophe Colomb**
**75008 Paris (FR)**

(54) **SYSTEMS AND METHODS FOR DETERMINING WEAR**

(57)    Embodiments determine wear. One such embodiment obtains, in memory associated with a processor, a finite element mesh representing a first object. For a given node of the obtained mesh, a wear variable is associated and linked to contact constraints associated with the node. A simulation of contact is performed, over movement increments, between the first object and a second object to determine wear at the node. Wear distance is iteratively determined for a given increment using the mesh, the associated variable, and the constraints. A position of the node in the mesh is iteratively updated based on the determined wear distance for the given increment, until the wear distance for each of the increments is determined. The wear at the node is determined based on the determined wear distance for each of the increments. An indication of the determined wear is output.

FIG. 2

EP 4 535 217 A1

**Description**

BACKGROUND

A number of existing product and simulation systems are offered on the market for the design and simulation of objects, *e.g.*, vehicles. Such systems typically employ computer aided design (CAD) and computer aided engineering (CAE) programs. These systems allow a user to construct, manipulate, and simulate complex three-dimensional models of objects or assemblies of objects. These CAD and CAE systems provide a model representation of objects, *e.g.*, real-world objects, using edges or lines, in certain cases with faces. Lines, edges, faces, or polygons may be represented in various manners, *e.g.*, nonuniform rational basis-splines (NURBS).

Such systems manage parts or assemblies of parts of modeled objects, which are mainly specifications of geometry. In particular, CAD files contain specifications, from which geometry is generated. From geometry, a three-dimensional CAD model or model representation is generated.

The advent of CAD and CAE systems allows for a wide range of representation possibilities for object. Example computer-based models used by CAD and CAE systems include CAD models and finite element models (*i.e.*, meshes). A computer-based model may be programmed in such a way that the model has the properties (*e.g.*, physical, material, or other physics-based) of the underlying real-world object or objects that the model represents. Example properties include stiffness (ratio of force to displacement), plasticity (irreversible strain), and viscosity (resistance to flow of one layer over an adjacent layer), among other examples. When a CAD or other such computer-based model as is known in the art, is programmed in such a way, it may be used to perform simulations of the object that the model represents. For example, a mesh-based model may be used to represent the interior cavity of a vehicle, the acoustic fluid surrounding a structure, or any number of real-world objects. Moreover, CAD and CAE systems, along with computer-based models, can be utilized to simulate engineering systems, such as real-world physical systems, *e.g.*, cars, airplanes, buildings, and bridges, among other examples. Further, CAE systems can be employed to simulate any variety and combination of behaviors of these physics-based systems, such as noise and vibration.

A common behavior that is modeled using CAD and CAE systems is wear. Wear is a removal or deformation of material at solid surfaces. Wear can occur at various rates, *e.g.*, gradually, and can be damaging. In machine elements, for instance, wear may cause functional surfaces to degrade, eventually leading to material failure and/or loss of functionality.

SUMMARY

A technical problem in existing computer-based systems, *e.g.*, finite element systems, that model surface wear is how to simultaneously treat interdependencies among wear distances, contact stress, and contact slip for implicit finite element simulation, to enhance accuracy and robustness without altering contact constraint connectivity and with minimal changes to code flow. Another technical problem in conventional systems is how to avoid an artificial requirement that surfaces that can undergo wear have to act as secondary surfaces (*i.e.*, surfaces where contact constraints are specified so constraint wear can be output as nodal wear). Past implementations of modeling surface wear have not addressed these challenges. Therefore, functionality with improved accuracy, robustness, and efficiency is needed. Embodiments provide such functionality.

An example embodiment is directed to a computer-implemented method for determining wear. The method begins by obtaining, in memory associated with a processor, a finite element mesh representing a first object. Next, for a given node of the obtained finite element mesh, the method associates a wear variable and links the associated wear variable to a plurality of contact constraints associated with the given node. The method then performs a simulation of contact, over a plurality of movement increments, between the first object and a second object to determine wear at the given node. Performing the simulation includes iteratively (i) determining wear distance for a given movement increment using the finite element mesh, the associated wear variable, and the plurality of contact constraints and (ii) updating a position of the given node in the finite element mesh based on the determined wear distance for the given movement increment, until the wear distance for each of the plurality of movement increments is determined. Performing the simulation further includes determining the wear at the given node based on the determined wear distance for each of the plurality of movement increments. In turn, the method outputs an indication of the determined wear.

In an example embodiment, determining the wear distance for the given movement increment may include performing a Newton iteration scheme to determine the wear distance until a convergence check is met. According to another example embodiment, performing the Newton iteration scheme may include, in each iteration of the Newton iteration scheme, determining, for each of the plurality of contact constraints, at least one of: (i) a constraint wear value, (ii) a modified gap value, (iii) a contact stress value, and (iv) a wear increment value.

According to an example embodiment, for a given iteration, the position of the given node in the finite element mesh used in determining wear distance may be an updated position of the given node from a previous iteration. In another example embodiment, for the given iteration, the updating may include modifying the updated position of the given node from the previous iteration based on wear distance determined for the given iteration.

In another example embodiment, the obtained finite element mesh may be a first finite element mesh. Further, in such an embodiment, at least one contact constraint of the plurality of contact constraints may include (i) at least one node of the first finite element mesh and (ii) at least one node of a second finite element mesh representing the second obj ect.

According to an example embodiment, determining the wear distance for the given movement increment may include computing, based on the plurality of contact constraints and a constraint coefficient value, a total constraint contribution. Determining the wear distance for the given movement increment may further include determining, based on the computed total constraint contribution, the wear distance.

Another example embodiment is directed to a computer-based system for determining wear. The system includes a processor and a memory with computer code instructions stored thereon. The processor and the memory, with the computer code instructions, are configured to cause the system to implement any embodiments or combination of embodiments described herein.

Yet another embodiment is directed to a computer program product for determining wear. The computer program product includes a non-transitory computer-readable medium with computer code instructions stored thereon. The computer code instructions are configured, when executed by a processor, to cause an apparatus associated with the processor to implement any embodiments or combination of embodiments described herein.

It is noted that embodiments of the method, system, and computer program product may be configured to implement any embodiments or combination of embodiments described herein.

BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.

FIG. 1 illustrates an example finite element model system where contact between two objects is subject to contributions from multiple constraints.
FIG. 2 is a flowchart of an example method for implicit wear modeling according to an embodiment.
FIG. 3 illustrates a working principle for an example ball bearing that may be simulated using embodiments.
FIGS. 4A-4E illustrate stages of an example simulation, according to an embodiment, of surface wear for twisting blocks.
FIG. 5 illustrates example simulation results of a surface wear simulation for twisting blocks according to another embodiment.
FIG. 6 illustrates an example of surface wear for twisting blocks determined using yet another embodiment.
FIGS. 7A-7F illustrate stages of an example simulation of surface wear for sliding blocks according to an embodiment.
FIG. 8 illustrates wear distance results for the example simulation of FIGS. 7A-7F using a common scale.
FIG. 9 is a graph of wear distance and wear coefficient determined using an embodiment.
FIG. 10 illustrates wear distance results for the example simulation of FIGS. 7A-7F using multiple scales.
FIG. 11 illustrates example simulation results of surface wear for sliding blocks according to another embodiment.
FIG. 12 is a graph of number of physical cycles and maximum wear distance for the examples of FIGS. 10 and 11, according to an embodiment.
FIGS. 13A and 13B illustrate examples of contact pressure for a slider determined using an embodiment.
FIG. 14 illustrates an example system in which wear occurs at corners of a slider according to an embodiment.
FIG. 15 illustrates an example finite element and associated contact penetration distance that may be utilized in embodiments.
FIG. 16 is a flowchart of a method for determining wear according to an example embodiment.
FIG. 17 is a schematic view of a computer network in which embodiments may be implemented.
FIG. 18 is a block diagram illustrating an example embodiment of a computer node in the computer network of FIG. 17.

DETAILED DESCRIPTION

A description of example embodiments follows.

**Introduction, Drawbacks of Existing Approaches, and Comparisons to Embodiments**

Incremental wear distance occurring within a time interval at a particular surface location may depend on a local contact stress state and incremental slip distance. Conversely, a local contact stress state and incremental slip distance may depend on local incremental wear distances of contact surfaces. Efficient and accurate treatment of interdependencies between wear, contact stress state, and incremental slip distance may be challenging in a context of a nonlinear implicit finite element simulation program. Embodiments provide novel functionality that can accurately and efficiently treat these interdependencies among wear distances, contact stress, and contact slip.

Other non-limiting examples of functionality provided by embodiments include:

a) Considering contact constraints, e.g., all contact constraints, in which each node participates;
b) Making algorithmic decisions regarding contact constraint numerics independent of which contact surfaces are susceptible to wear; and
c) Avoiding subjective determination of a single representative value of incremental slip (and other contact constraint quantities) at nodes involved in multiple contacts.

Moreover, embodiments are not limited to a context of small wear distances relative to dimensions of finite elements underlying contact surfaces. Embodiments can further apply to larger wear distances that also affect underlying finite element calculations, due to a significant volume fraction of those elements being eroded due to surface wear.

Embodiments can process numerical design aspects associated with simultaneous implicit treatment of interdependencies among wear distances, contact stress, and contact slip to promote accuracy, robustness, and efficiency. In addition, embodiments can be employed for finite element simulation including effects of surface wear.

A conventional approach for modeling effects of ablation or wear (in which material is eroded at a boundary) is Arbitrary Lagrangian-Eulerian (ALE) adaptive meshing. Using this existing approach (*i.e.,* ALE), an incremental wear distance (affecting a next simulation increment) can depend on converged values of contact stress and contact slip (and other quantities). The approach is limited, however, in that contact stress and contact slip (and other quantities) have lagging ("explicit") dependence, instead of simultaneous ("implicit") dependence, on incremental wear distance.

Another existing finite element system has numerous drawbacks, including, for example:

a) The system does not simultaneously satisfy interdependencies among wear distances, contact stress, and contact slip in each solution increment, leading to inaccuracies and convergence problems.
b) A wear calculation for a given node may not consider all contact constraints in which a node participates.
c) A user is directed to adjust numerics based on which surface or surfaces of an interface are susceptible to wear.
d) The implementation of surface wear is also inelegant with respect to calling for a user to tune fundamental roles of surfaces in contact definitions depending on which or both surfaces of a contact interface may undergo wear.

i. In contrast, when employing an approach of embodiments, wear can occur on surfaces regardless of their "main" and "secondary" roles in contact formulations.

e) For a given simulation increment, the existing system starts by carrying out Newton iterations with changes to loading conditions as usual, *based on fixed (previously determined/lagging) wear distances.* Upon convergence of this iteration sequence, the system computes and applies incremental wear distances based on predicted contact stress, slip increment, etc., fields.
f) After adjusting wear distance, the existing system performs additional Newton iterations, with wear distances fixed at the new values. These iterations may not converge, in part due to loss of equilibrium occurring upon changing wear distances. If the iterations do not converge, the system re-attempts the simulation increment with a small increment size. It is implied that if these iterations do converge, then wear distances are not up-to-date with the latest contact stress, slip increment, etc., fields. In other words, *the existing system does not simultaneously treat interdependencies among wear distances, contact stress, and contact slip.*
g) The existing system's wear capability affects contact and underlying elements. The effect on underlying elements is similar to the pre-existing ALE adaptive meshing to model effects of ablation or wear, described hereinabove.
h) The staggered treatment of interdependencies among wear distances, contact stress, and contact slip in the existing system is susceptible to convergence problems.

i. In contrast, embodiments can simultaneously treat these interdependencies during Newton iterations to provide better convergence behavior and less dependence of results on simulation increment sizes.

i) The existing system has an undesired dependency of numerical details, which a user controls, on whether one, the other, or both surfaces contacting each other are susceptive to wear. A user of the system is thus steered toward having wear calculations based on nodes of so-called "secondary" surfaces. The reason for this steering appears to be an assumption by the existing system that nodal contact stress, slip, etc., quantities appearing in a wear rate equation for a given node are each associated with a single (preferred) contact constraint, even though each node is typically involved in multiple contact constraints.

i. In contrast, embodiments can avoid such undesirable complications and consider contributions to wear for a node from all contact constraints in which the node participates.

An existing wear model is the Archard model (or Archard's Law), developed in 1953. The Archard equation is a simple model used to describe sliding wear and is based on a theory of asperity contact. The equation takes a form of $Q = \frac{KWL}{H}$, where:

a) $Q$ is a total volume of wear debris produced;
b) $K$ is a dimensionless constant;
c) $W$ is a total normal load;
d) $L$ is a sliding distance; and
e) $H$ is a hardness of the softest contacting surfaces.

A related model from 2004 describes a sequence of simulations in which researchers computed incremental wear distances between simulations. This 2004 model is another example in which contact stress and contact slip (and other quantities) have lagging ("explicit") dependence, instead of simultaneous ("implicit") dependence, on incremental wear distance.

Another related model from 2008 describes correlation of material hardness and material yield strength. The original Archard wear model involves material hardness. However, yield strength data for materials is often more readily available than hardness, so other references about wear models mention substituting yield strength into a wear model.

**Discussion of Example Embodiments**

Consider a wear distance evolution at a location of a surface $S$ given by $\dot{W} = \phi_{wear}(W, \sigma_P, T, f) \mu_{fric}(\sigma_P, T, \gamma, f) \sigma_P \dot{\gamma} / \sigma_Y$, which, using the trapezoidal rule, is the below incremental form:

$$\Delta W_{t+\Delta} = \frac{1}{2}\left[\Delta W_t + \phi_{wear}^S \mu_{fric}\sigma_P \Delta\gamma / \sigma_Y\right]$$

In the above equations:

a) $t + \Delta t$ refers to a value or expression evaluated for a current increment number of a simulation.
b) $t$ refers to a value or expression evaluated for a previous increment number of a simulation.
c) $\Delta W$ is incremental wear distance.
d) $\phi_{wear}^S$ is a unitless wear coefficient that depends on wear distance, contact pressure, temperature, and field variables in a current increment for surface S.
e) $\mu_{fric}$ is a friction coefficient at a node with its own dependencies on contact pressure, temperature, contact slip values, and field variables in a current increment.
f) $\sigma_P(h, W)$ is contact pressure, which depends on current penetration $h$ and wear distance $W$.
g) $\sigma_Y$ is yield stress of material of a wear surface.
h) $\Delta\gamma$ is a slip increment.

Thus, incremental wear and/or wear evolution may depend on current contact stress, which in turn may depend on current wear distance. Such a circular dependence may hold for other variations of a wear model where embodiments may still be employed.

Finite elements may involve discretizing contact surfaces into element faces and nodes, in addition to discrete contact constraints on a secondary surface. Eventually, contact nodal forces may be assembled from individual contact constraints to solve for equilibrium. Any modeling of contact-based wear on both secondary and main surfaces may call for accumulating wear values on nodes. For instance, accumulating wear at contact constraints may only be restricted to a secondary surface and constraint wear may not be a nodal value for output purposes. To accumulate wear at a main node, for example, the main node can have contributions from multiple constraints if faces connected to this node are in a shadow of a constraint tributary area projected on a main surface.

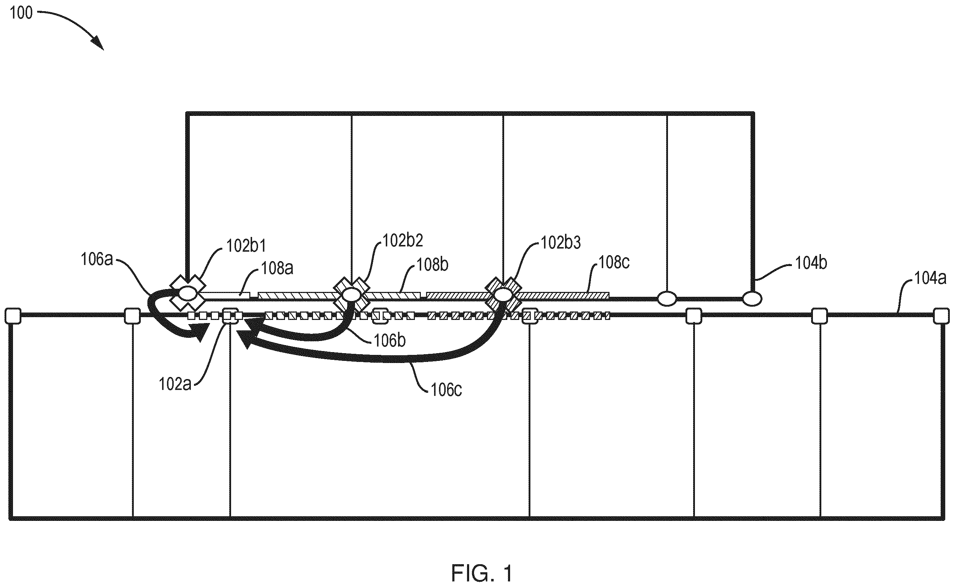

FIG. 1 illustrates an example finite element system 100 of contributions from multiple constraints. As shown in FIG. 1, node 102a on two-dimensional (2D) main surface 104a has wear contributions 106a-106c from participation in three contact constraints 108a-108c centered at three secondary nodes 102b1-102b3 on secondary surface 104b.

Therefore, the finite element system 100 illustrates that nodal wear may have contributions from multiple constraints, *e.g.*, 108a-108c, while individual constraint gaps may be modified by wear interpolated from multiple nodes, *e.g.*, 102b1-102b3. With an implicit treatment, such a two-way dependence may cause tight coupling among contact constraints, *e.g.*, 108a-108c, breaking a fundamental architecture of a finite element code, where individual constraint contributions, *e.g.*, 106a-106c, are assembled without any dependence on information from other constraints. Described hereinbelow is a novel approach where embodiments achieve such a fully implicit treatment of wear with minimal changes to existing architecture and/or code flow.

An embodiment may include two exemplary aspects described hereinbelow for a fully implicit treatment to accumulate wear on both secondary and main surfaces, *e.g.*, 104a and 104b, respectively.

In an embodiment, a first exemplary aspect may be to introduce nodal wear $W^K$ as an unknown at each node, *e.g.*, 102a and 102b1-102b3, on secondary and main surfaces, e.g., 104a and 104b, respectively. These extra unknowns may call for extra equations, one per node, and they may be $W_{t+\Delta t}^K - (W_t^K + \Delta W_{t+\Delta t}^K) = 0$. Hereinbelow is a description of how nodal incremental wear $\Delta W_{t+\Delta t}^K$ may be calculated. To continue, a current value of a continuous wear field may be interpolated using $W_{t+\Delta t} = \sum_{K=1}^{\#nodes} W_{t+\Delta t}^K N_W^K$ where $N_W^K$ are nodal wear shape functions. Contact stresses may be calculated from current constraint penetration, which may be modified as $h_{mod,t+\Delta t}^I = h_{t+\Delta t}^I - (W_{t+\Delta t}^{Is} + W_{t+\Delta t}^{IM})$ to account for wear. Here, $W_{t+\Delta t}^{IJ} = \left(\int_\Omega N_\lambda^I . W_{t+\Delta t} \, d\Omega\right)/\int_\Omega N_\lambda^I . d\Omega$ on (a secondary or main) surface *J, e.g.,* 104a or 104b, may be a constraint averaged quantity. Therefore, when an increment converges, contact stresses may be consistent with current nodal wear values.

According to an embodiment, a second exemplary aspect may be to decompose incremental nodal wear as a sum of contributions, *e.g.*, 106a-106c, from individual contact constraints, *e.g.*, 108a-108c, that a node, *e.g.,* 102a, participates in via constraint coefficients. For this, current incremental wear on either a main or secondary surface (*e.g.*, 104a or 104b, respectively) at node *K* may be defined as an average over a tributary area, where $N_W^K$ is a shape function associated with the node such that nodal shape functions within an element face add up to 1 (one). A denominator may equivalently be a nodal area $A_K$.

$$\Delta W^K = \frac{\int_\Omega \Delta W . N_W^K \, d\Omega}{\int_\Omega N_W^K \, d\Omega} = \frac{\int_\Omega \Delta W . N_W^K \, d\Omega}{A_K}$$

An embodiment may use traction shape functions $N_\lambda^I$ for individual constraints *I* on a secondary surface, *e.g.*, 104b, to decompose a numerator as a sum over constraints. Also, $\sum_{I=1}^{\#Constr} N_\lambda^I = 1$ may apply within each secondary face. The following equation may thus apply:

$$\Delta W^K = \frac{\int_\Omega \Delta W . (1) . N_W^K \, d\Omega}{A_K} = \frac{\int_\Omega \Delta W . (\sum_{I=1}^{\#Constr} N_\lambda^I) . N_W^K \, d\Omega}{A_K} = \frac{\sum_{I=1}^{\#Constr} \int_\Omega \Delta W . N_\lambda^I . N_W^K \, d\Omega}{A_K}$$

In an embodiment, each constraint contribution may be approximately:

According to another embodiment, $\Delta W^I$ in the above equation may be a constraint wear increment given below:

$$\Delta W_{t+\Delta t}^I = \frac{1}{2}\left[\Delta W_t^I + \phi_{wear}^S(W^I, \sigma_P^I, ..)\mu_{fric}(\sigma_P^I, ..)\sigma_P^I \Delta \gamma^I\right]$$

Further, according to yet another embodiment, the above constraint value may be distributed both to secondary and main nodes, *e.g.*, 102b1-102b3 and 102a, respectively, with constraint coefficients $c_{IK}$ according to the below equation:

$$\Delta W^K = \sum_{I=1}^{\#Constr} \Delta W^I \left(\int_\Omega N_\lambda^I . N_W^K \, d\Omega\right)/A_K = \sum_{I=1}^{\#Constr} \Delta W^I c_{IK}$$

Therefore, in an embodiment, current nodal wear $W^K_{t+\Delta t}$ may be updated by adding known wear $W^K_t$ from a prior increment to a sum of independent constraint contributions $\Delta W^I c_{IK}$, which may be assembled in any known manner of assembling any nodal quantity in finite elements.

According to another embodiment, to solve regular equilibrium equations with additional nodal wear equations introduced hereinabove, a Newton scheme may be used in most finite element codes. In yet another embodiment, a Newton scheme may include derivatives of governing equations resulting in stiffness matrices. For example, derivatives of additional wear equations may give the following equation:

$$dW^K_{t+\Delta t} - d(W^K_t + \Delta W^K_{t+\Delta t}) = dW^K_{t+\Delta t} - \sum_{I=1}^{\#Constr} d\Delta W^I c_{IK} + \Delta W^I dc_{IK}$$

In an embodiment, the above summation term over individual contact constraints may result in independent stiffness contributions per constraint that can be assembled in any known manner of assembling any nodal quantity in finite elements.

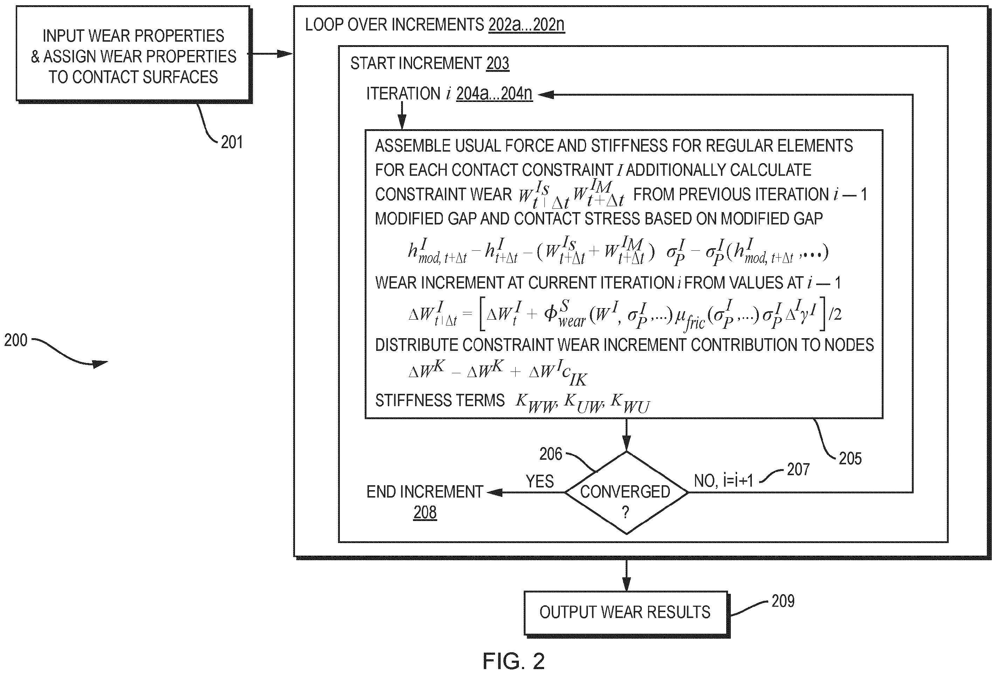

FIG. 2 is a flowchart of an example method 200 for implicit wear modeling with a Newton method for solving equations, according to an embodiment. The method 200 is computer-implemented and may be implemented using any computing device, *e.g.*, a processor, or combination of computing devices known to those of skill in the art. In an embodiment, the method 200 may be implemented using an existing finite element code via coding changes.

The method 200 begins at step 201 by inputting wear properties, and assigning wear properties to contact surfaces, e.g., 104a and 104b (FIG. 1). At step(s) 202a-202n, the method 200 loops over one or more increment(s). Specifically, at step 203, the method 200 starts a given increment. At step(s) 204a-204n, the method 200 performs one or more iteration(s) *i* of a given increment.

Continuing with FIG. 2, at step 205, for a current iteration *i*, the method 200 performs the following operations:

a) Assemble force and stiffness for regular elements in any known manner of assembling any nodal quantity in finite elements;

b) For each constraint *I*, additionally calculate:

i. Constraint wear $W^{I_S}_{t+\Delta t} W^{I_M}_{t+\Delta t}$ from a previous iteration *i* - 1.
ii. Modified gap and contact stress based on modified gap equations

$$h^I_{mod,\,t+\Delta t} = h^I_{t+\Delta t} - (W^{I_S}_{t+\Delta t} + W^{I_M}_{t+\Delta t}) \text{ and } \sigma^I_P = \sigma^I_P(h^I_{mod,\,t+\Delta t}, \dots);$$

and

iii. Wear increment at the current iteration *i* from values at the previous iteration *i* - 1 based on an equation

$$\Delta W^I_{t+\Delta t} = \frac{1}{2}\left[\Delta W^I_t + \phi^S_{wear}(W^I, \sigma^I_P, ..)\mu_{fric}(\sigma^I_P, ..)\sigma^I_P \Delta\gamma^I\right];$$

c) Distribute a constraint wear increment contribution to nodes, *e.g.*, 102a (FIG. 1), based on an equation $\Delta W^K = \Delta W^K + \Delta W^I c_{IK}$; and
d) Generate stiffness terms $K_{WW}, K_{UW}, K_{WU}$.

Continuing again with FIG. 2, at step 206, the method 200 determines if a current iteration *i* is converged. If no, then at step 207, the method 200 proceeds to a next iteration *i* + 1. Otherwise, at step 208, the method 200 ends a given increment. At step 209, the method 200 outputs wear results.

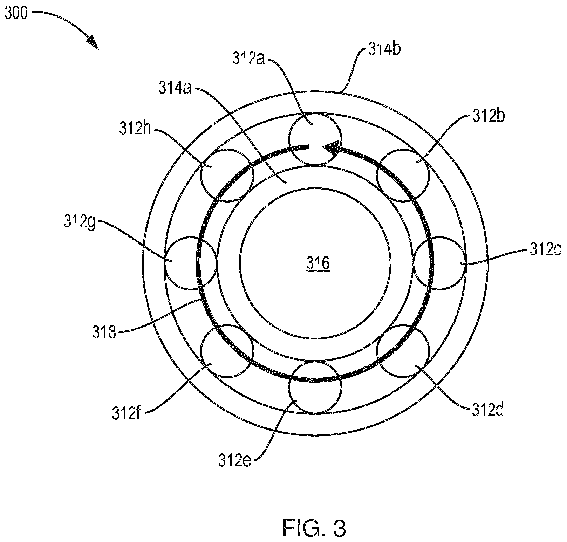

FIG. 3 illustrates a working principle for an example ball bearing 300 that may be simulated using embodiments. The example ball bearing 300 shown in FIG. 3 includes balls 312a-312h, inner race 314a, outer race 314b, and hub 316. A ball bearing, *e.g.*, 300, is a type of rolling-element bearing that uses balls, *e.g.*, 312a-312h, to maintain separation between bearing races, *e.g.*, 314a and 314b. The purpose of a ball bearing, *e.g.*, 300, is to reduce rotational friction and support radial and axial loads. A ball bearing achieves this purpose by using at least two races, *e.g.*, 314a and 314b, to contain balls, *e.g.*, 312a-312h, and transmit loads through the balls. In most applications, one race, *e.g.*, 314b, is stationary and another, *e.g.,* 314a, is attached to a rotating assembly, *e.g.*, a hub or shaft 316. As one bearing race, *e.g.,* 314a, rotates, it causes balls, *e.g.*, 312a-312h, to rotate as well. Because balls, *e.g.,* 312a-312h, are rolling, they have a much lower coefficient of friction than if two flat surfaces were sliding against each other. In FIG. 3, arrow 318 shows a direction of rotation of example ball bearing 300.

An embodiment may be used to simulate wear for the balls 312a-312h of the example ball bearing 300 as the balls 312a-312h move around the races 314a and 314b during one or more sample cycles. For example, in an embodiment, a simulation may include moving each of the balls 312a-312h one eighth of the way around the races 314a and 314b during an individual sample cycle and determining the wear as a result of the movement.

**Exemplary Results**

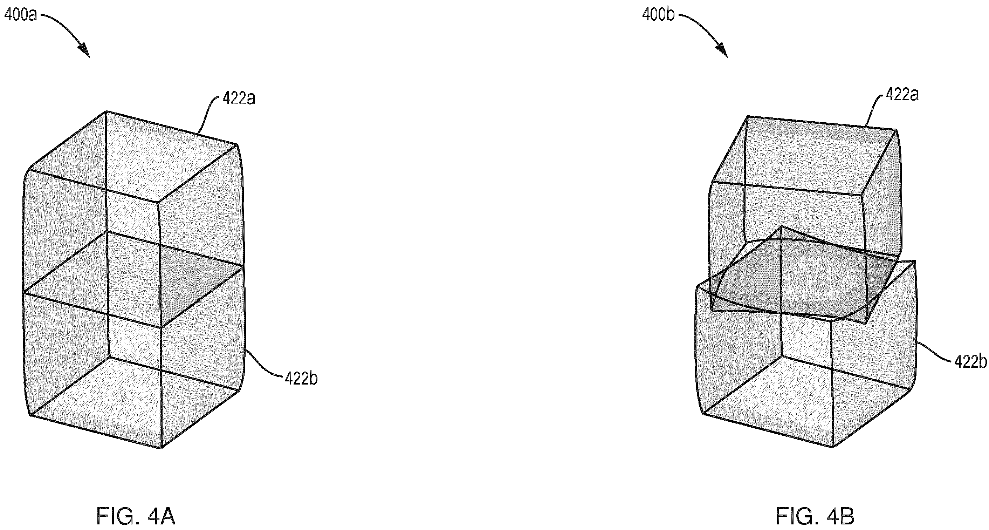

FIGS. 4A-4E illustrate stages 400a-400e, respectively, of an example simulation of surface wear for twisting blocks 422a and 422b performed according to an embodiment. In an embodiment, the example of FIGS. 4A-4E simulates an incremental 90° twist of the block 422a against the block 422b with about 1 ° of twist per increment. Other known increment sizes are also suitable. In the example simulation of FIGS. 4A-4E, according to another embodiment, the blocks 422a and 422b may have the same material, part dimensions, and/or surface wear properties assigned, but may have unequal mesh refinement.

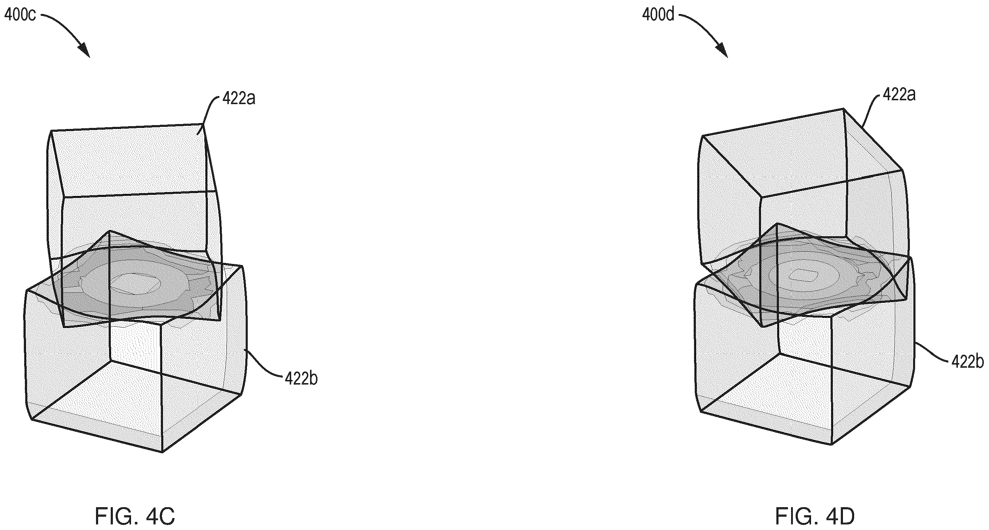

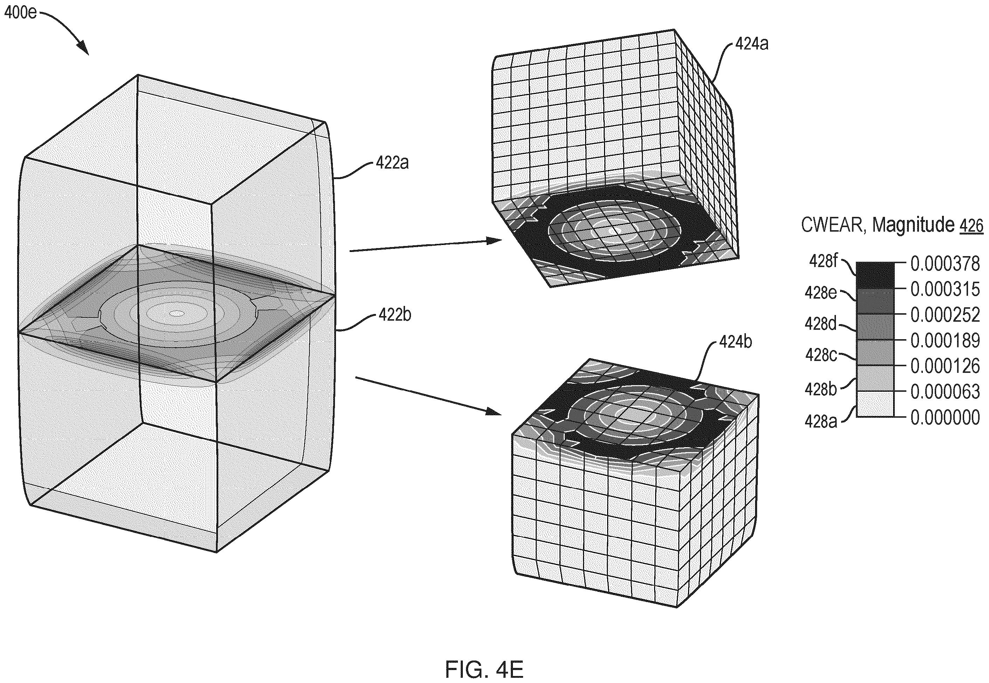

FIG. 4A shows the initial stage 400a of the example simulation before twisting of the block 422a against the block 422b commences, according to an embodiment. FIG. 4B shows the second stage 400b of the example simulation where the block 422a has been twisted a certain number of increments against the block 422b. FIG. 4C shows the third stage 400c of the example simulation where the block 422a has been twisted for additional increments (*i.e.*, beyond the stage 400b) against the block 422b. FIG. 4D shows the fourth stage 400d of the example simulation where the block 422a has been twisted for yet more increments (*i.e.*, beyond the stage 400c) against block the block 422b. FIG. 4E shows the last stage 400e of the example simulation where the block 422a has completed a 90° twist (*i.e.,* relative to its initial position in the stage 400a of FIG. 4A) against the block 422b.

Also shown in FIG. 4E are finite element mesh blocks 424a and 424b, as well as shading key 426. The finite element mesh blocks 424a and 424b are models used in an embodiment to perform the simulation illustrated by FIGS. 4A-4E. It is noted that the blocks 424a and 424b have different mesh refinement, where the block 424a has a finer mesh compared to the block 424b. The finite element mesh blocks 424a and 424b graphically depict varying wear distances along the surfaces of the blocks 422a and 422b, respectively, after the final stage 400e of the example simulation. As shown for the block 422a by the finite element mesh block 424a with reference to the shading key 426, in an embodiment, areas 428a may have a wear distance of about 0.000000-0.000063, areas 428b may have a wear distance of about 0.000063-0.000126, areas 428c may have a wear distance of about 0.000126-0.000189, 428d areas may have a wear distance of about 0.000189-0.000252, areas 428e may have a wear distance of about 0.000252-0.000315, and areas 428e may have a wear distance of about 0.000315-0.000378. Likewise, the finite element mesh block 424b and the shading key 426 show that the block 422b has the same wear distance levels as the block 422a at the final stage 400e. It should be noted that, in an embodiment, different wear distances may be shown by color coding instead of shading; other known indicia are also suitable.

Results of the example simulation of FIGS. 4A-4E indicate consistent wear distance values for the two blocks 422a and 422b (*i.e.,* as shown graphically in FIG. 4E by the finite element mesh blocks 424a and 424b with reference to the key 426). According to an embodiment, a small amount of wear may be incurred after each quarter turn. Further, in yet another embodiment, about 5% of a part, e.g., the block 422a or 422b, may be worn away after 1,000 turns. The results of the example simulation of FIGS. 4A-4E also reflect embodiments' ability to model wear on both surfaces of a contact interaction, *e.g.*, surfaces of both the block 422a and the block 422b. Moreover, the results demonstrate how embodiments can minimize or eliminate dependence on numerical details, such as mesh refinement (*e.g.*, the example simulation is not affected by the unequal mesh refinement of the finite element mesh models 424a and 424b), secondary/main roles, etc.

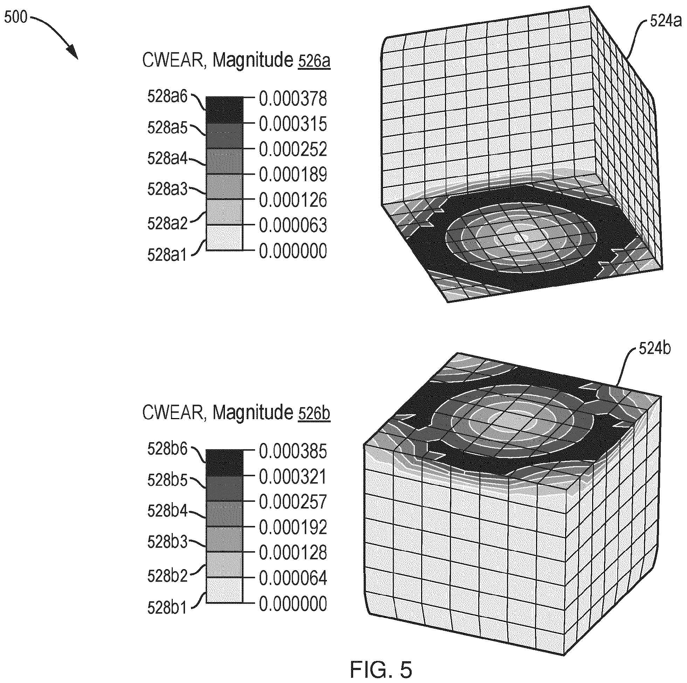

FIG. 5 illustrates example simulation 500 results of a surface wear simulation, according to an embodiment, for twisting blocks. The results from simulation 500, similar to FIGS. 4A-4E, were generated by simulating an incremental 90° twist of the block 422a against the block 422b (FIG. 4A), except that the example simulation 500 results were obtained using a varying increment, with sizes up to about 8° of twist per increment, and on average about 2.8° of twist per increment. Other known variations of increment sizes are also suitable. As shown in FIG. 5, finite element mesh block 524a and corresponding shading key 526a display wear distance for the block 422a upon completion of the example simulation 500, while finite element mesh block 524b and corresponding key 526b display comparable wear distance for the block 422b. The finite element mesh block 524a and the corresponding shading key 526a show areas 528a1 with a wear distance of about 0.000000-0.000063, areas 528a2 with a wear distance of about 0.000063-0.000126, areas 528a3 with a wear distance of about 0.000126-0.000189, areas 528a4 with a wear distance of about 0.000189-0.000252, 528a5 with a wear distance of about 0.000252-0.000315, and areas 528a6 with a wear distance of about 0.000315-0.000378. Similarly, the finite element mesh block 524b and the corresponding shading key 526b show areas 528b1 with a wear distance of about 0.000000-0.000064, areas 528b2 with a wear distance of about 0.000064-0.000128, areas 528b3 with a wear distance of about 0.000128-0.000192, areas 528b4 with a wear distance of about 0.000192-0.000257, areas 528b5 with a wear distance of about 0.000257-0.000321, and areas 528b6 with a wear distance of about 0.000321-0.000385.

Results from the example simulations illustrated in FIGS. 5 and 4E demonstrate that wear distances from the embodiments are in quite good agreement with each other. The results may also show that wear distances predicted by embodiments may not be particularly or even at all sensitive to details of incrementation. It is noted that in an embodiment, increment sizes may need to be small enough to accurately accumulate nodal contact energies that influence wear.

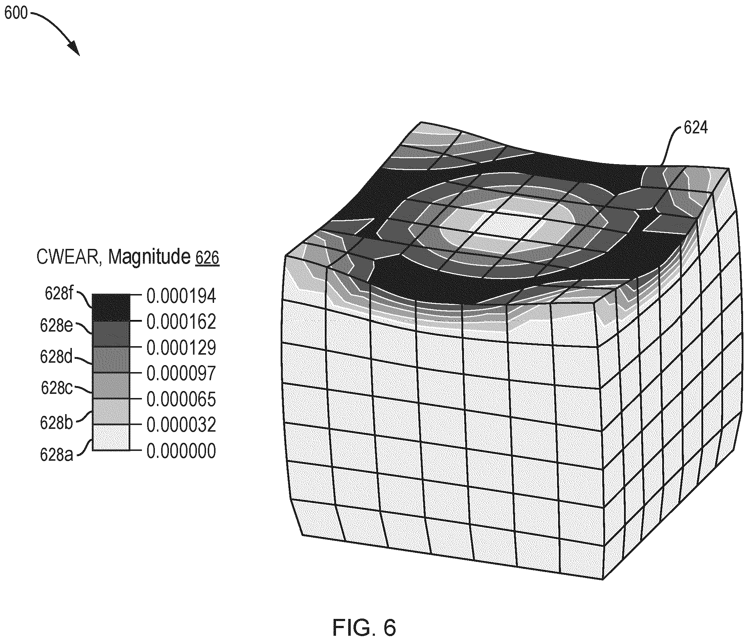

FIG. 6 illustrates an example of simulation 600 results of surface wear for twisting blocks according to yet another embodiment. In the embodiment of FIG. 6, similar to FIGS. 4A-4E, the example 600 illustrates results from simulating incremental twisting of the block 422a against the block 422b (FIG. 4A), except that the example 600 only simulated a 45° twist, *i.e.*, half of the 90° twist of the example simulation of FIGS. 4A-4E. Other known twist sizes are also suitable. As shown in FIG. 6, finite element model 624 and corresponding shading key 626 display wear distance results for the block 422b upon completion of the example simulation 600. The finite element model 624 and the corresponding shading key 626 show areas 628a with a wear distance of about 0.000000-0.000032, areas 628b with a wear distance of about 0.000032-0.000065, areas 628c with a wear distance of about 0.000065-0.000097, areas 628d with a wear distance of about 0.000097-0.000129, areas 628e with a wear distance of about 0.000129-0.000162, and areas 628f with a wear distance of about 0.000162-0.000194.

The results shown in FIG. 6 demonstrate that wear values for the 90° twist of the example simulation of FIGS. 4A-4E may be approximately twice the wear values for the 45° twist of the example simulation 600. For example, multiplying the upper bound of 0.000194 for the areas 628f by two yields a value of 0.000388, which is only 0.000010 different from the upper bound of 0.000378 for the areas 428f (FIG. 4E). Embodiments can take advantage of the foregoing approximations when simulating representative wear cycles.

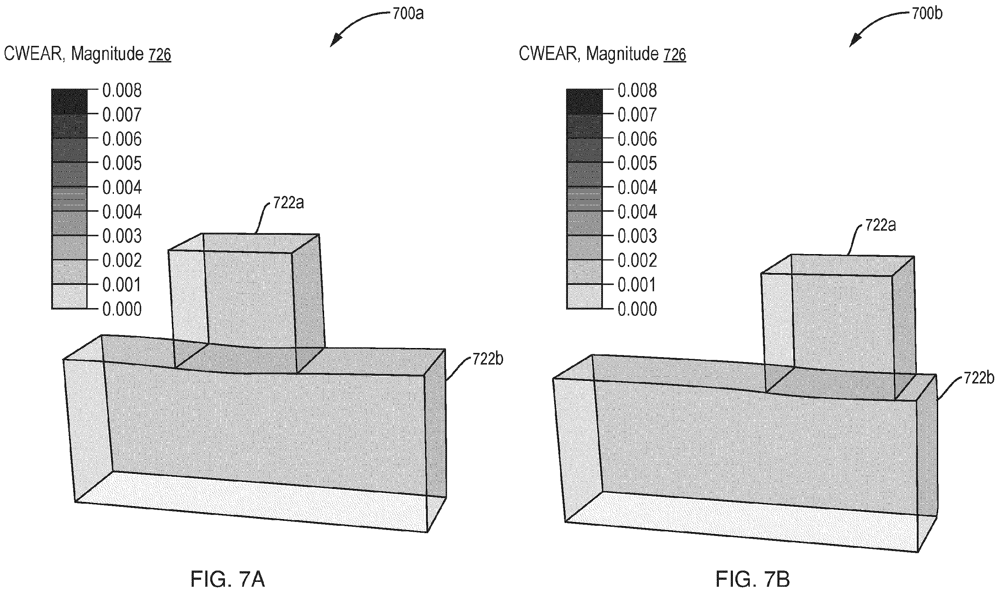

FIGS. 7A-7F illustrate stages 700a-700f, respectively, of an example simulation of surface wear for sliding blocks 722a and 722b according to an embodiment. In FIGS. 7A-7F, wear distances are indicated by color key 726. According to an embodiment, the example simulation of FIGS. 7A-7F may approximate wear accumulated during, *e.g.*, 160,000, physical or load cycles by directly simulating, *e.g.*, seven, sample cycles, where each individual cycle may consist of sliding the block 722a along a surface of the block 722b from one end of the block 722b to the other. Other numbers of physical and/or sample cycles are also suitable. In the example simulation of FIGS. 7A-7F, according to an embodiment, an initial step may be performed to push the top block 722a into the bottom block 722b. Further, according to yet another embodiment, a second step may then include establishing boundary conditions-*e.g.*, displacement and/or velocity boundary conditions-for the simulation, followed by simulating a cycle of sliding the block 722a along a surface of the block 722b. In an embodiment, one or more wear properties may be specified for the example simulation. For instance, defining wear properties may include specifying a wear coefficient and/or its dependence on wear distances, contact pressure, surface temperature, and/or other field variables for each contact surface, among other examples. According to another embodiment, the example simulation of FIGS. 7A-7F may also adjust a number of physical cycles represented by each sample cycle and repeat the abovementioned second step until a stopping condition-*e.g.*, a target maximum wear value-is met.

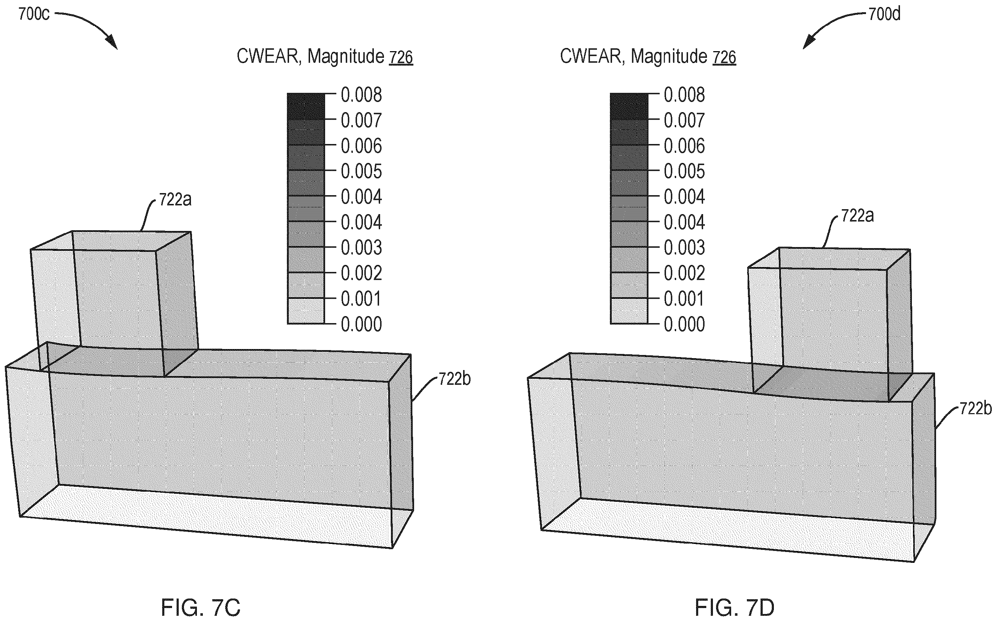

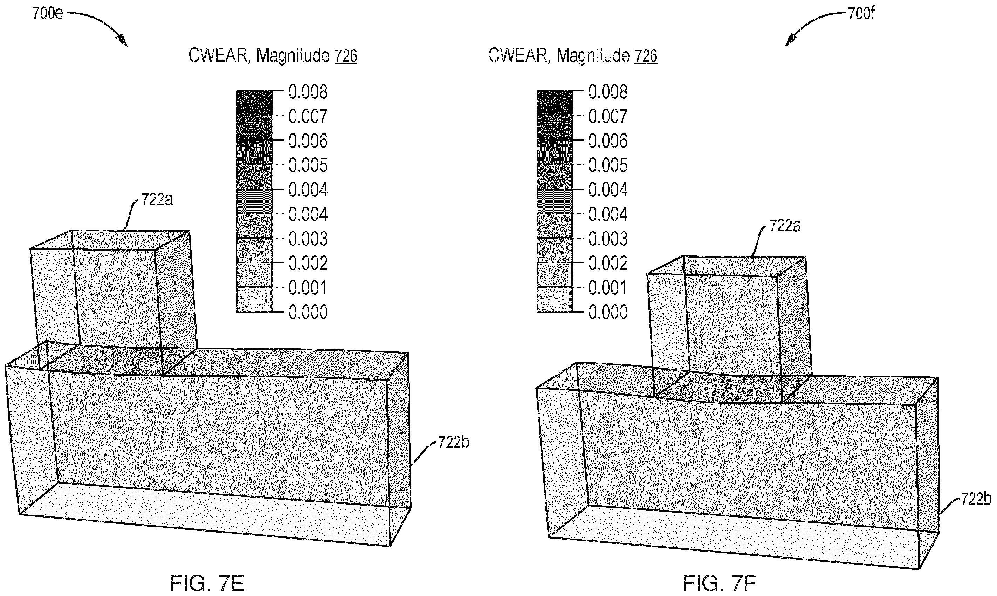

FIG. 7A shows the first stage 700a of the example simulation before sliding of the block 722a along the block 722b commences, where the block 722a is at an initial position. FIG. 7B shows the second stage 700b of the example simulation where the block 722a has been slid toward a first end of the block 722b. FIG. 7C shows the third stage 700c of the example simulation where the block 722a has been slid toward a second end of the block 722b. FIG. 7D shows the fourth stage 700d of the example simulation where the block 722a has again been slid toward the first end of the block 722b. FIG. 7E shows the fifth stage 700e of the example simulation where the block 722a has again been slid toward the second end of the block 722b. FIG. 7F shows the final stage 700f of the example simulation where the block 722a has returned to an initial position also shown in FIG. 7A.

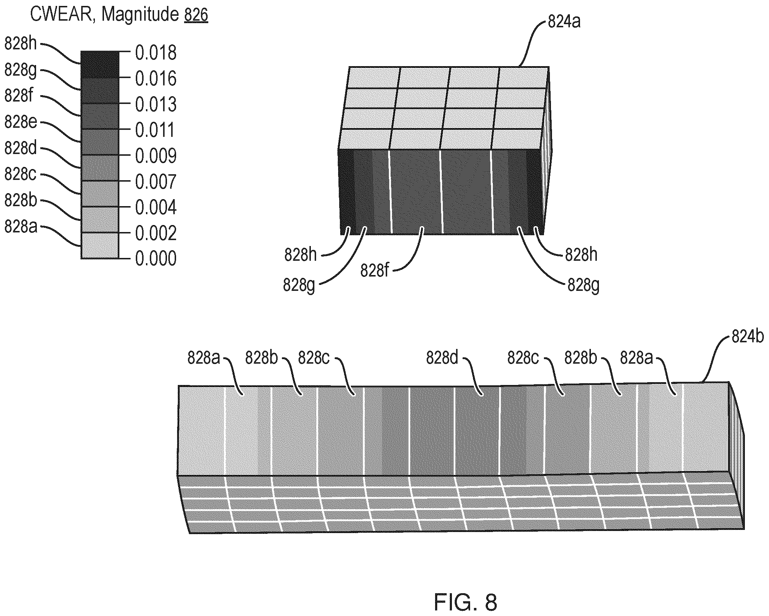

FIG. 8 illustrates wear distance results for the example simulation of FIGS. 7A-7F using a common scale 826. In FIG. 8 the wear distance results are illustrated via finite element models 824a and 824b (which correspond to blocks 722a and 722b, respectively), as well as the shading key 826. With reference to the shading key 826, the finite element models 824a and 824b graphically depict varying wear distances along the surfaces of the blocks 722a and 722b (FIG. 7A), respectively, after the final stage 700f (FIG. 7F) of the example simulation of FIGS. 7A-7F. As indicated by the finite element models 824a and 824b and the key 826, areas 828a have a wear distance of about 0.000-0.002, areas 828b have a wear distance of about 0.002-0.004, areas 828c have a wear distance of about 0.004-0.007, areas 828d have a wear distance of about 0.007-0.009, areas 828e have a wear distance of about 0.009-0.011, areas 828f have a wear distance of about 0.011-0.013, areas 828g have a wear distance of about 0.013-0.016, and areas 828h have a wear distance of about 0.016-0.018.

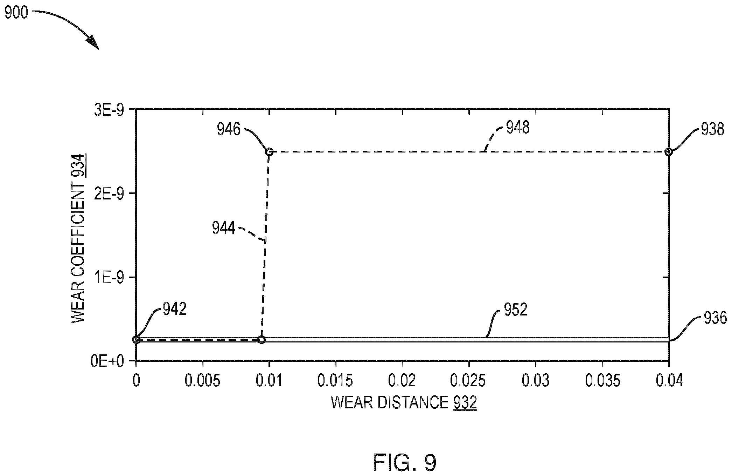

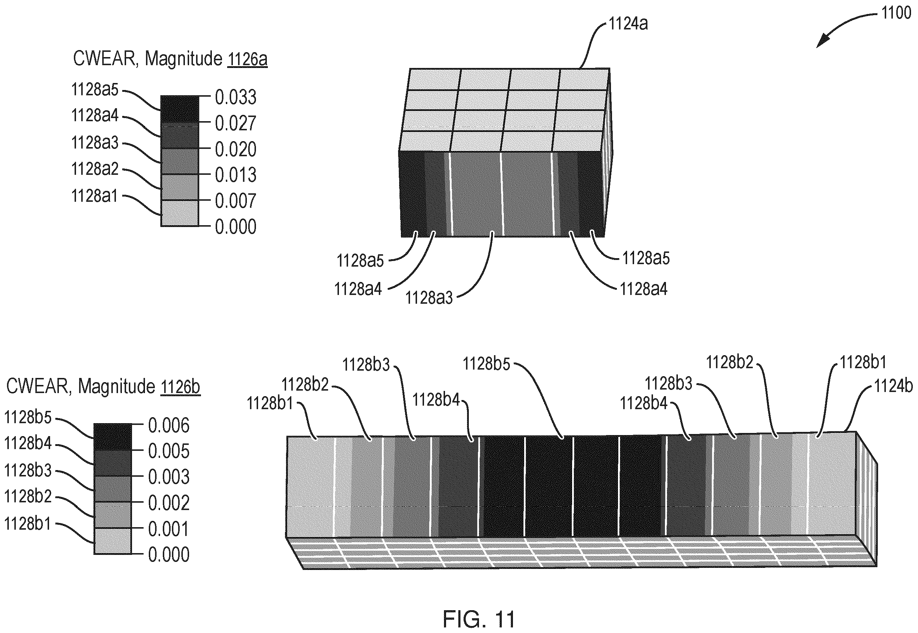

FIG. 9 is a graph 900 of wear coefficient 934 versus wear distance 932 according to an embodiment. In FIG. 9, wear coefficient 934 for use in performing a simulation, *e.g.*, the example simulation of FIGS. 7A-7F, is shown by solid line 936. The line 936 indicates that, *e.g.*, in the example simulation of FIGS. 7A-7F, a constant wear coefficient was utilized. Still in the plot 900, dashed line 938 indicates a varying wear coefficient 934 that can be used in embodiments, *e.g.*, in the example simulation 1100 described hereinbelow in relation to FIG. 11. The plot 900 shows that at point 942 the simulations utilizing the wear coefficients given by lines 936 and 938 may have a wear coefficient 934 of $2.5\times10^{-10}$ when a wear distance is 0 (zero). According to an embodiment, when the wear distance 932 of a simulation using a wear coefficient given by line 938 reaches a threshold value, *e.g.*, 0.01, a transition 944 may occur to a new, higher value for the wear coefficient 934 at point 946. In another embodiment, the wear coefficient 934 value at the point 946 may, for instance, be ten times higher than an initial value, e.g., $2.5\times10^{-9}$. Other known wear coefficients and/or threshold wear distance values are also suitable. To continue, after reaching a threshold wear distance value, the wear coefficient 934 for the simulation using a wear coefficient given by the line 938 remains at the new, higher value, as shown by region 948. In contrast, the wear coefficient 934 for the simulation using a wear coefficient given by the line 936 remains constant even after reaching or exceeding a threshold wear distance value, as shown by region 952.

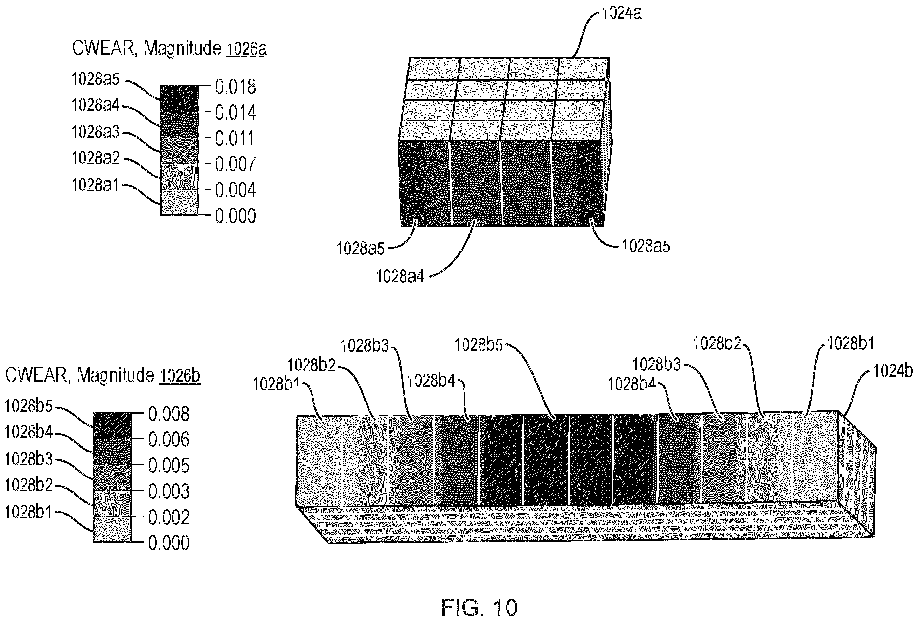

FIG. 10 illustrates wear distance results for the example simulation of FIGS. 7A-7F using multiple scales 1026a and 1026b. In FIG. 10, wear distance results are illustrated via finite element models 1024a and 1024b, together with the corresponding shading keys 1026a and 1026b. FIG. 10 illustrates wear distance results after the example simulation of FIGS. 7A-7F is carried out for, e.g., 160,000, physical cycles using a constant wear coefficient, as described hereinabove with respect to line 936 of FIG. 9. With reference to the corresponding keys 1026a and 1026b, the finite element models 1024a and 1024b graphically depict varying wear distances along surfaces of the blocks 722a and 722b (FIG. 7A), respectively, after the final stage 700f (FIG. 7F) of the example simulation of FIGS. 7A-7F. As indicated by the finite element model 1024b and the corresponding shading key 1026b, for the block 722b, areas 1028b1 have a wear distance of about 0.000-0.002, areas 1028b2 have a wear distance of about 0.002-0.003, areas 1028b3 have a wear distance of about 0.003-0.005, areas 1028b4 have a wear distance of about 0.005-0.006, and areas 1028b5 have a wear distance of about 0.006-0.008. Likewise, as indicated by the finite element model 1024a and the corresponding shading key 1026a, for the block 722a, areas 1028a4 have a wear distance of about 0.011-0.014 and areas 1028a5 have a wear distance of about 0.014-0.018. It is noted that, according to an embodiment, the finite element model 1024a does not have wear corresponding to areas 1028a1 (wear distance about 0.000-0.004), areas 1028a2 (wear distance about 0.004-0.007), and/or areas 1028a3 (wear distance about 0.007-0.011).

FIG. 11 illustrates an example simulation 1100 results of surface wear for sliding blocks according to another embodiment. Similar to FIGS. 7A-7F, 8, and 9, the example 1100 also illustrates approximate wear simulation results for the blocks 722a and 722b (FIG. 7A) accumulated during physical or load cycles by directly simulating sample cycles, except that the example 1100 illustrates approximate wear simulation results for, *e.g.,* 111,498, physical cycles and where a varying wear coefficient, as described hereinabove with respect to the line 938 of FIG. 9 was used. Other numbers of physical cycles are also suitable. As shown in FIG. 11, wear distance results for the blocks 722a and 722b after completion of the example simulation 1100 are illustrated via finite element models 1124a and 1124b, together with corresponding shading keys 1126a and 1126b. For the block 722b, the finite element model 1124b and the corresponding shading key 1126b show areas 1128b1 with a wear distance of about 0.000-0.001, areas 1128b2 with a wear distance of about 0.001-0.002, areas 1128b3 with a wear distance of about 0.002-0.003, areas 1128b4 with a wear distance of about 0.003-0.005, and areas 1128b5 with a wear distance of about 0.005-0.006. Likewise, for the block 722a, the finite element model 1124a and the corresponding shading key 1126a show areas 1128a3 with a wear distance of about 0.013-0.020, areas 1128a4 with a wear distance of about 0.020-0.027, and areas 1128a5 with a wear distance of about 0.027-0.033. It is noted that in according to an embodiment, the block 1124a does not include areas 1128a1 (wear distance about 0.000-0.007) and/or areas 1128a2 (wear distance about 0.007-0.013).

Results from the example simulation 1100 shown in FIG. 11 demonstrate that greater wear occurs on the top block 722a over fewer cycles as compared to results from the simulation illustrated by FIG. 10. For example, FIG. 11 has an upper bound value of 0.033 for the areas 1128a5 which is greater than a comparable value of 0.018 for the areas 1028a5 of FIG. 10. Such an increase in wear may be due to a transition to a much larger wear coefficient in FIG. 11. The results from the example simulation 1100 show that in both FIGS. 10 and 11, wear on the bottom block 722b remains below a transition threshold. Specifically, an upper bound value of 0.008 for the areas 1028b5 (FIG. 10) and a comparable value of 0.006 for the areas 1128b5 is less than a transition threshold value, e.g., 0.01 shown in the plot 900 of FIG. 9. Moreover, the latter value of 0.006 is lower than the former value of 0.008 because fewer cycles, *e.g.,* 111,498, were simulated to obtain the results in FIG. 11 as compared to, *e.g.*, 160,000, cycles that were simulated to obtain the results shown in FIG. 10.

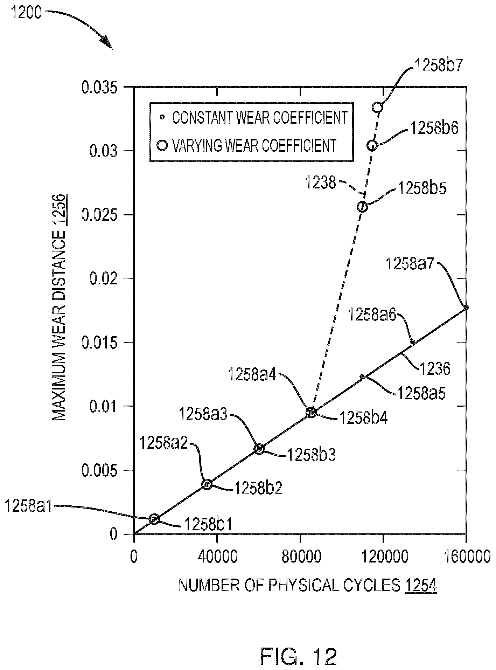

FIG. 12 is a graph 1200 of maximum wear distance 1256 versus number of physical cycles 1254 for the example simulations of FIGS. 10 and 11, according to an embodiment. In the graph 1200 the example simulation of FIG. 10 is shown by solid line 1236 and include points 1258a1-1258a7 for, *e.g.*, seven, sample cycles. Further, in the graph 1200, the example simulation of FIG. 11 is shown by dashed line 1238 and include the points 1258b1-1258b7 for, *e.g.*, seven, sample cycles. As shown at the point 1258a7 of the solid line 1236, simulating seven sample cycles results in approximating, e.g., 160,000, physical cycles 1254 and reaching a maximum wear distance 1256 of, *e.g.*, 0.018. In the plot 1200 it can be observed that when a maximum wear distance 1256 of the simulation 1238 reaches or exceeds a threshold value, e.g., 0.01 at the point 1258b4, then, as described hereinabove with respect to FIG. 9, the simulation 1238 transitions to a new, higher wear coefficient value. This transition also results in the simulation 1238 having a final maximum wear distance 1256 that is greater than that of the simulation 1236, e.g., 0.033 at the point 1258b7 compared to 0.018 at the point 1258a7.

Conversely, following such a transition (*e.g.*, at point 1258b4), the simulation 1238 also approximates a smaller number of physical cycles during each remaining sample cycle, e.g., between points 1258b4 and 1258b7. As such, approximating fewer physical cycles causes a final number of physical cycles 1254 for the simulation 1238 to be lower than that of the simulation 1236, e.g., 111,498, cycles at the point 1258b7 compared to, e.g., 160,000, cycles at the point 1258a7.

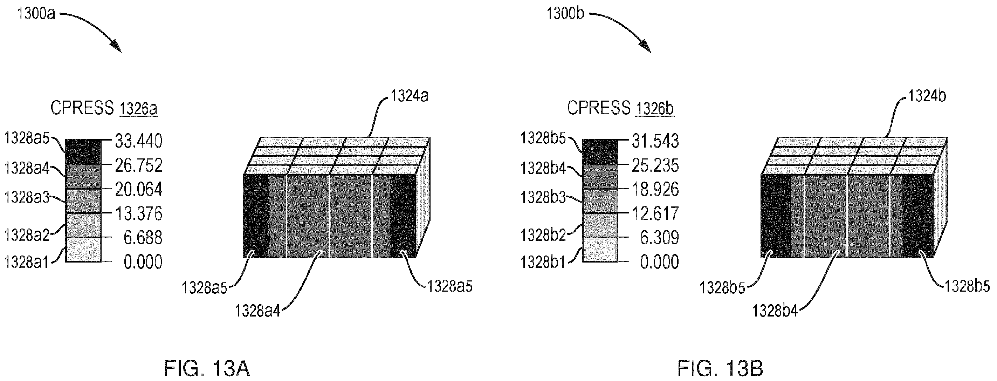

FIGS. 13A and 13B illustrate examples 1300a and 1300b of contact pressure for a slider in the simulation of FIG. 11, according to an embodiment. As shown in FIG. 13A, contact pressure for the block 722a (FIG. 7A) prior to conducting the simulation 1100 (FIG. 11) is illustrated via finite element model 1324a and shading key 1326a. As indicated by the finite element model 1324a and the shading key 1326a, for the block 722a, areas 1328a4 have a contact pressure of about 20.064-26.752 and areas 1328a5 have a contact pressure of about 26.752-33.440. It is noted that in the embodiment of FIG. 13A, the finite element model 1324a does not include areas 1328a1 indicating contact pressure of about 0.000-6.688, areas 1328a2 indicating contact pressure of about 6.688-13.376, and/or areas 1328a3 indicating contact pressure of about 13.376-20.064. As shown in FIG. 13B, according to an embodiment, contact pressure for the block 722a after conducting the simulation 1100 to approximate, *e.g.*, 111,498, physical cycles is illustrated via finite element model 1324b and shading key 1326b. As indicated by the finite element model 1324b and the shading key 1326b, for the block 722a, areas 1328b4 have a contact pressure of about 18.926-25.235 and areas 1328b5 have a contact pressure of about 25.235-31.543. It is noted that in the embodiment of FIG. 13B, the finite element model 1324b does not include areas 1328b1 indicating contact pressure of about 0.000-6.309, areas 1328b2 indicating contact pressure of about 6.309-12.617, and/or areas 1328b3 indicating contact pressure of about 12.617-18.926. As seen in FIGS. 13A and 13B, wear incurred from conducting the simulation 1100 may lead to changes in contact pressure values, for instance, a reduction from an upper bound of 33.440 for the areas 1328a5 in the example 1300a to an upper bound of 31.543 for the areas 1328b5 in the example 1300b.

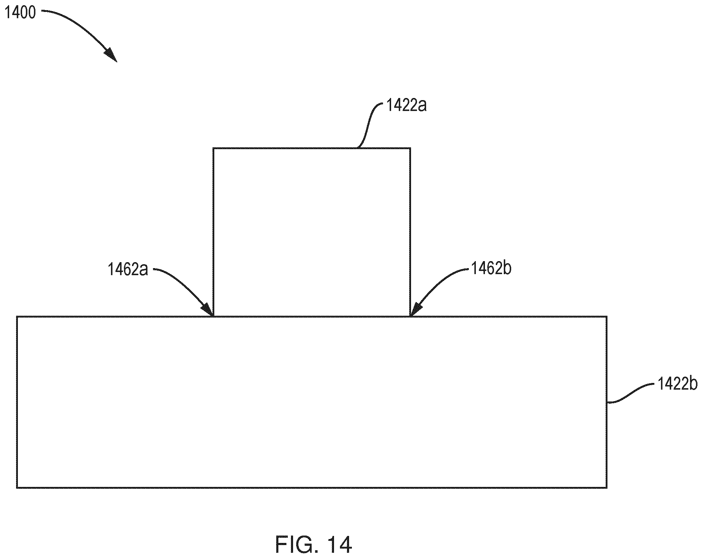

FIG. 14 illustrates an example system 1400 in which wear occurs at corners of a slider according to an embodiment. FIG. 14 depicts wear occurring at corners 1462a and 1462b as block 1422a slides along a surface of block 1422b. According to another embodiment, increasing wear at the corners 1462a and 1462b may correspondingly lessen a stress concentration. For instance, when right angle corners, *e.g.*, 1462a and/or 1462b, are in contact, stress peaks in contact pressures may occur at and/or around the corners, and those regions may experience greater wear. This may occur because Archard's Law and the physical behavior it models suggest a direct dependency of wear rates on values of contact pressures. So, contact pressure peaks may imply larger wear rates and overall larger wear distances. As the corners start wearing at a faster rate, the original right angle corner shape may change and contact pressures may start dropping for this modified shape.

In an embodiment, nodal wear distances may evolve according to Archard's Law or a suitable known variant thereof. According to another embodiment, among the suitable known variants of Archard's Law, the most intuitive variants may have incremental nodal wear distance proportional to incremental nodal friction energy density, for example, as expressed by the following relationship:

$$\Delta w_i \propto \sum_{j=1}^{nContConstraints} \left( -f_{ij}^{Fric} \Delta \gamma_j / A_j \right) \geq 0$$

In the above relationship:

a) $\Delta w_i$ is incremental wear at node 'i' from a movement increment.

b) $f_{ij}^{Fric}$ is frictional force contribution from constraint 'j' at node 'i'.

c) $\Delta \gamma_j$ is slip increment for constraint 'j'.

d) $A_j$ is constraint area of constraint 'j'.

In yet another embodiment, contact penetration distance, *h*, may be affected by wear distance, for example, as expressed by the following equations and relationships:

$$h_{no\_wear} = \left[ \left( \sum_{i=1}^{n} N_i \boldsymbol{x}_{mi} \right) - \boldsymbol{x}_s \right] \cdot \boldsymbol{n}$$

$$h = h_{no\_wear} - w_s - \left( \sum_{i=1}^{n} N_i w_{mi} \right)$$

$$h \leq h_{no\_wear}$$

$$\sigma_P = K_{pnlty} h \text{ for } h > 0$$

In the above equations and relationships:

a) $x_s$ denotes a position of a "secondary" node.

b) $\left( \sum_{i=1}^{n} N_i \boldsymbol{x}_{mi} \right)$ denotes a position of a projection of the secondary node on a "main" surface in the normal direction $\boldsymbol{n}$.

c) $w_s$ is wear distance for the secondary node.

d) $h_{no\_wear}$ is penetration distance without including wear.

e) $\sigma_P$ is contact pressure.

f) $K_{pnlty}$ is contact penalty stiffness.

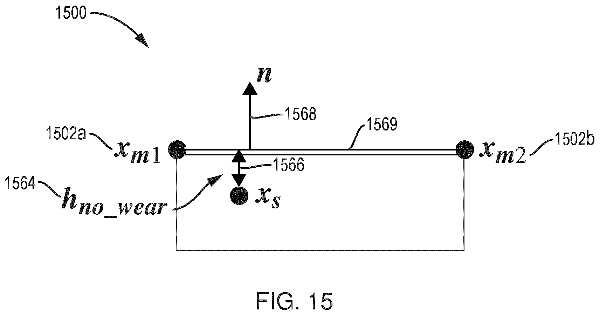

FIG. 15 illustrates an example finite element 1500 and associated contact penetration distance according to an embodiment. According to such an embodiment, as shown in FIG. 15, the finite element 1500 includes nodes 1502a and 1502b and edge 1569. The finite element 1500 has associated contact penetration distance 1564 prior to effects of wear distance, secondary node position 1566, and normal vector 1568.

**Exemplary Method Embodiment**

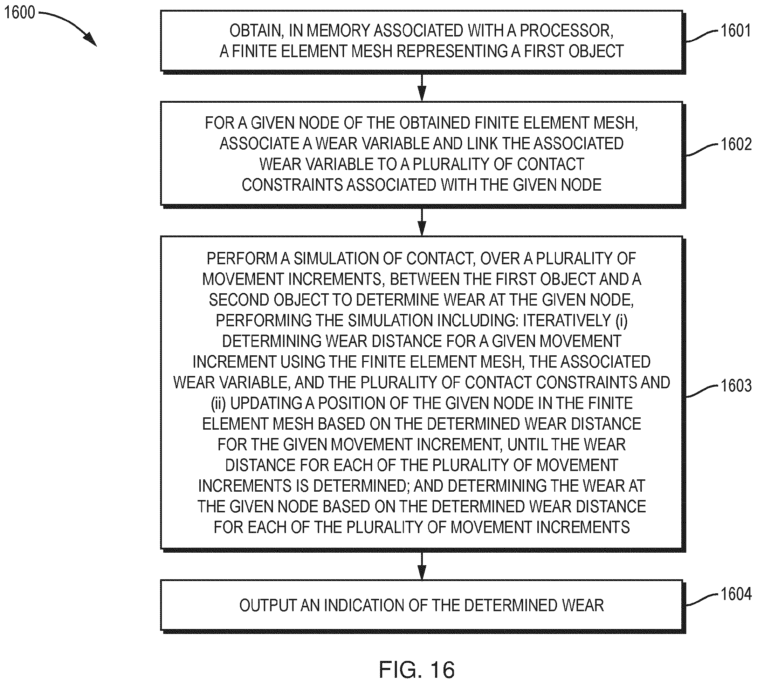

FIG. 16 is a flowchart of a method 1600 for determining wear according to an embodiment. The method 1600 is computer-implemented and may be implemented using any computing device, e.g., a processor, or combination of computing devices known to those of skill in the art.

The method 1600 begins at step 1601 by obtaining, in memory associated with a processor, a finite element mesh representing a first object, e.g., 422a (FIG. 4A), 722a (FIG. 7A), or 1422a (FIG. 14). Next, at step 1602, for a given node, e.g., 102a (FIG. 1), 102b1-102b3 (FIG. 1), or 1502a-1502b (FIG. 15), of the obtained finite element mesh, the method 1600 associates a wear variable and links the associated wear variable to a plurality of contact constraints, e.g., 108a-108c (FIG. 1), associated with the given node. At step 1603, the method 1600 then performs a simulation of contact, over a plurality of movement increments, between the first object and a second object, e.g., 422b (FIG. 4A), 722b (FIG. 7A), or 1422b (FIG. 14), to determine wear at the given node. Performing the simulation includes iteratively (i) determining wear distance for a given movement increment using the finite element mesh, the associated wear variable, and the plurality of contact constraints and (ii) updating a position of the given node in the finite element mesh based on the determined wear distance for the given movement increment, until the wear distance for each of the plurality of movement increments is determined. Performing the simulation further includes determining the wear at the given node based on the determined wear distance for each of the plurality of movement increments. In turn, at step 1604, the method outputs an indication of the determined wear.

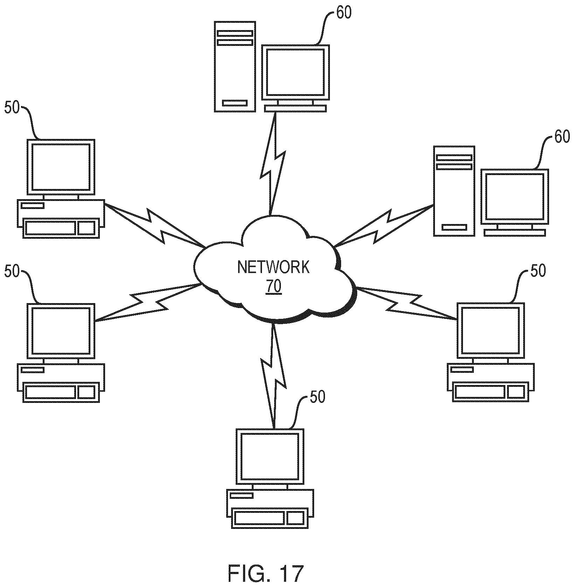

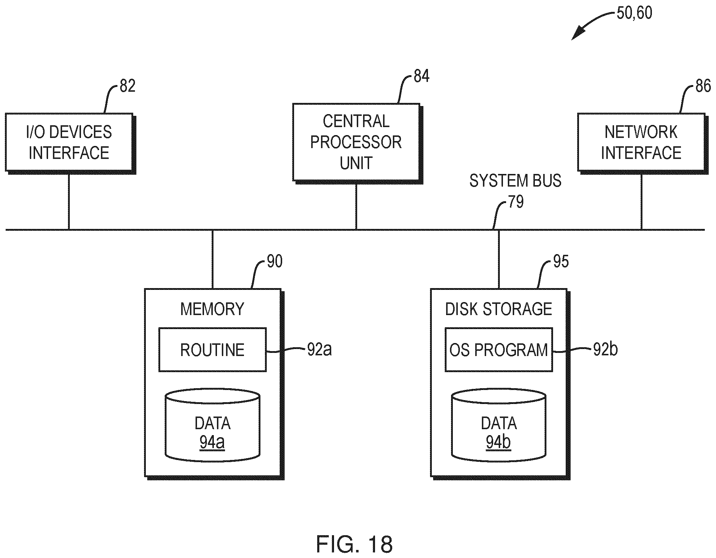

As noted, the method 1600 is computer-implemented and, as such, the functionality and effective operations, e.g., the obtaining (1601), associating and linking (1602), performing (1603), and outputting (1604), are automatically implemented by one or more digital processors. The method 1600 can also be implemented using any computer device or combination of computing devices known in the art. Among other examples, the method 1600 can be implemented using computer(s)/device(s) 50 and/or 60 described hereinbelow in relation to FIGS. 17 and 18.

In an embodiment of the method 1600, determining the wear distance for the given movement increment may include performing a Newton iteration scheme to determine the wear distance until a convergence check is met. According to another embodiment of the method 1600, performing the Newton iteration scheme may include, in each iteration of the Newton iteration scheme, determining, for each of the plurality of contact constraints, at least one of: (i) a constraint wear value, (ii) a modified gap value, (iii) a contact stress value, and (iv) a wear increment value.

According to an embodiment of the method 1600, for a given iteration, the position of the given node in the finite element mesh used in determining wear distance may be an updated position of the given node from a previous iteration. In another embodiment of the method 1600, for the given iteration, the updating may include modifying the updated position of the given node from the previous iteration based on wear distance determined for the given iteration.

In an embodiment of the method 1600, the obtained finite element mesh may be a first finite element mesh. At least one contact constraint of the plurality of contact constraints may include (i) at least one node of the first finite element mesh and (ii) at least one node of a second finite element mesh representing the second object.

According to an embodiment of the method 1600, determining the wear distance for the given movement increment may include computing, based on the plurality of contact constraints and a constraint coefficient value, a total constraint contribution. Determining the wear distance for the given movement increment may further include determining, based on the computed total constraint contribution, the wear distance.

Embodiments, *e.g.*, the method 1600, can be used as part of a manufacturing method. For example, the method 1600 can be employed in an optimization loop where the method 1600 is used to evaluate wear of a real-world object. In such an embodiment, based on the determined wear, design of a real-world object can be approved, or deficiencies can be identified. In response to identifying deficiencies, changes can be made to the design, *e.g.*, in a finite element model and, after these changes are made, the new design can be evaluated using the method 1600. This process can repeat until a design that meets requirements is identified. After determining a design that meets requirements, the real-world object that meets the requirements can be manufactured. Further, embodiments may begin by measuring or obtaining data regarding a real-world object and creating the finite element model representing the real-world object. This finite element model can, in turn, be used in embodiments to determine wear characteristics of the real-world object. Further, this finite element model can also be used in the aforementioned optimization loop to (i) determine an improved design for the real-world object and (ii) manufacture an improved version, e.g., a version that complies with a wear requirement, of the real-world object.

## Exemplary Advantages

Embodiments can simultaneously treat interdependencies among wear distance, contact stress, and contact slip for implicit finite element simulation, which promotes accuracy because contact wear and other contact quantities are consistent.

Further, embodiments can determine incremental wear distance at a surface node of a finite element model by considering all contact constraints in which that node is involved.

Implementing embodiments also does not require any changes to a code architecture of any implicit finite element code.

Moreover, embodiments are not limited by a need to distinguish between "main" and "secondary" numerical roles of contacting surfaces.

Embodiments can also operate even if balanced main-secondary roles are assigned.

## Computer Support

Embodiments can be implemented in existing software and CAD and CAE platforms. For instance, embodiments can be implemented using features and functionalities of 3DS SIMULIA® software, including the Abaqus® application by Applicant-Assignee Dassault Systèmes Americas Corporation, among other examples.

FIG. 17 is a schematic view of a computer network in which embodiments may be implemented. Client computer(s)/devices 50 and server computer(s) 60 provide processing, storage, and input/output (I/O) devices executing application programs and the like. Client computer(s)/device(s) 50 can also be linked through communications network 70 to other computing devices, including other client device(s)/processor(s) 50 and server computer(s) 60. The communications network 70 can be part of a remote access network, a global network (*e.g.*, the Internet), cloud computing servers or service, a worldwide collection of computers, local area or wide area networks, and gateways that currently use respective protocols (*e.g.*, TCP/IP, Bluetooth®, etc.) to communicate with one another. Other electronic device/computer network architectures are also suitable.

FIG. 18 is a block diagram illustrating an example embodiment of a computer node (*e.g.*, client processor(s)/device(s) 50 or server computer(s) 60) in the computer network 70 of FIG. 17. Each computer node 50, 60 contains system bus 79, where a bus is a set of hardware lines used for data transfer among components of a computer or processing system. The system bus 79 is essentially a shared conduit that connects different elements of a computer system (*e.g.*, processor, disk storage, memory, I/O ports, network ports, etc.) that enables transfer of information between the elements. Attached to the system bus 79 is an I/O devices interface 82 for connecting various input and output devices (*e.g.*, keyboard, mouse, display(s), printer(s), speaker(s), etc.) to the computer node 50, 60. A network interface 86 allows the computer node to connect to various other devices attached to a network (*e.g.*, the network 70 of FIG. 17). A memory 90 provides volatile storage for computer software instructions 92a and data 94a used to implement an embodiment of the present disclosure (*e.g.*, the method 200 (FIG. 2), the method 1600 (FIG. 16), etc.). A disk storage 95 provides non-volatile storage for the computer software instructions 92b and data 94b used to implement an embodiment of the present disclosure. A central processor unit 84 is also attached to the system bus 79 and provides for execution of computer instructions.

In one embodiment, the processor routines 92a-92b and data 94a-94b are a computer program product (generally referenced as 92), including a non-transitory, computer readable medium (*e.g.*, a removable storage medium such as DVD-ROM(s), CD-ROM(s), diskette(s), tape(s), etc.) that provides at least a portion of the software instructions for the disclosure system. The computer program product 92 can be installed by any suitable software installation procedure, as is well known in the art. In another embodiment, at least a portion of the software instructions may also be downloaded over a cable, communication, and/or wireless connection. In other embodiments, the disclosure programs are a computer program propagated signal product embodied on a propagated signal on a propagation medium (*e.g.*, a radio wave, an infrared wave, a laser wave, a sound wave, or an electrical wave propagated over a global network such as the Internet, or other network(s)). Such carrier medium or signals provide at least a portion of the software instructions for the present disclosure routines/program 92.

In alternative embodiments, the propagated signal is an analog carrier wave or digital signal carried on the propagated medium. For example, the propagated signal may be a digitized signal propagated over a global network (*e.g.*, the Internet), a telecommunications network, or other networks (such as the network 70 of FIG. 17). In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of the computer program product 92 is a propagation medium that the computer system 50 may receive and read, such as by receiving the propagation medium and identifying a propagated signal embodied in the propagation medium, as described above for computer program propagated signal product.

Generally speaking, the term "carrier medium" or transient carrier encompasses the foregoing transient signals, propagated signals, propagated medium, storage medium, and the like.

In other embodiments, the program product 92 may be implemented as a so-called Software as a Service (SaaS), or other installation or communication supporting end-users.

## Exemplary Specification of Surface Wear Coefficients

In an embodiment, surface wear coefficients may be specified for Abaqus using the following keyword interface for general contact:

```
*Surface Property, Name=WEAR1
*Wear Surface Properties, FricCoefDep=NO, Unitless=No, ReferenceStress=150
1.E-6
**
*Surface, Name=WearSurf1
Elset1,
*Surface, Name=WearSurf2
Elset2,
*Contact
*Contact Inclusions, All Exterior
*Surface Property Assignment, Property=Wear
WearSurf1, WEAR1
WearSurf2, WEAR1
```

According to an embodiment, surface wear coefficients may be specified for Abaqus using the following keyword interface for contact pairs:

```
*Surface Property, Name=WEAR1
*Wear Surface Properties, FricCoefDep=NO, Unitless=No, ReferenceStress=150
1.E-6
*Surface Interaction, Name=DfltContProp
**
*Surface, Name=WearSurf1, Property=WEAR1
Elset1,
*Surface, Name=WearSurf2, Property=WEAR1
Elset2,
*Contact Pair, Type=Surface, Interaction=DfltContProp
Surf1, Surf2
```

Embodiments or aspects thereof may be implemented in the form of hardware including but not limited to hardware circuitry, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, hardware, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and, thus, the data processors described herein are intended for purposes of illustration only and not as a limitation of the embodiments.

The teachings of all patents, published applications, and references cited herein are incorporated by reference in their entirety.

While example embodiments have been particularly shown and described, it will be understood by those skilled in the art that various changes in form and details may be made therein without departing from the scope of the embodiments encompassed by the appended claims.

For example, the foregoing description and details of embodiments in the figures reference Applicant-Assignee (Dassault Systèmes Americas Corporation) and Dassault Systèmes tools and platforms, for purposes of illustration and not limitation. Other similar tools and platforms are also suitable.

**Claims**

1. A computer-implemented method for determining wear, the computer-implemented method comprising, by a processor:

   obtaining, in memory associated with the processor, a finite element mesh representing a first object;
   for a given node of the obtained finite element mesh, associating a wear variable and linking the associated wear variable to a plurality of contact constraints associated with the given node;
   performing a simulation of contact, over a plurality of movement increments, between the first object and a second object to determine wear at the given node, performing the simulation including:

   iteratively (i) determining wear distance for a given movement increment using the finite element mesh, the associated wear variable, and the plurality of contact constraints and (ii) updating a position of the given node in the finite element mesh based on the determined wear distance for the given movement increment, until the wear distance for each of the plurality of movement increments is determined; and
   determining the wear at the given node based on the determined wear distance for each of the plurality of movement increments; and

   outputting an indication of the determined wear.

2. The computer-implemented method of Claim 1, wherein determining the wear distance for the given movement increment includes:
   performing a Newton iteration scheme to determine the wear distance until a convergence check is met.

3. The computer-implemented method of Claim 2, wherein performing the Newton iteration scheme includes, in each iteration of the Newton iteration scheme:
   determining, for each of the plurality of contact constraints, at least one of: (i) a constraint wear value, (ii) a modified gap value, (iii) a contact stress value, and (iv) a wear increment value.

4. The computer-implemented method of Claim 1 where, for a given iteration, the position of the given node in the finite element mesh used in determining wear distance is an updated position of the given node from a previous iteration.

5. The computer-implemented method of Claim 4 where, for the given iteration, the updating includes:
modifying the updated position of the given node from the previous iteration based on wear distance determined for the given iteration.

6. The computer-implemented method of Claim 1, wherein the obtained finite element mesh is a first finite element mesh, and wherein at least one contact constraint of the plurality of contact constraints includes (i) at least one node of the first finite element mesh and (ii) at least one node of a second finite element mesh representing the second object.

7. The computer-implemented method of Claim 1, wherein determining the wear distance for the given movement increment includes:

computing, based on the plurality of contact constraints and a constraint coefficient value, a total constraint contribution; and
determining, based on the computed total constraint contribution, the wear distance.

8. A computer program for determining wear comprising instructions which, when executed by a computer system, cause the computer system to perform the method according to any one of Claims 1 to 7.

9. A computer-based system for determining wear, the computer-based system comprising:

a processor; and
a memory having recorded thereon the computer program of Claim 8.

FIG. 1

EP 4 535 217 A1

**LOOP OVER INCREMENTS 202a...202n**

INPUT WEAR PROPERTIES & ASSIGN WEAR PROPERTIES TO CONTACT SURFACES

201

200

**START INCREMENT 203**

ITERATION $i$ 204a...204n

ASSEMBLE USUAL FORCE AND STIFFNESS FOR REGULAR ELEMENTS FOR EACH CONTACT CONSTRAINT $I$ ADDITIONALLY CALCULATE CONSTRAINT WEAR $W_{t+\Delta t}^{IS}$, $W_{t+\Delta t}^{IM}$ FROM PREVIOUS ITERATION $i-1$ MODIFIED GAP AND CONTACT STRESS BASED ON MODIFIED GAP

$$h_{mod, t+\Delta t}^{I} - h_{t+\Delta t}^{I} - (W_{t+\Delta t}^{IS} + W_{t+\Delta t}^{IM}) \quad \sigma_P^I - \sigma_P^I(h_{mod, t+\Delta t}^I, \dots)$$

WEAR INCREMENT AT CURRENT ITERATION $i$ FROM VALUES AT $i-1$

$$\Delta W_{t+\Delta t}^{I} = \left[ \Delta W_t^I + \phi_{wear}^S(W^I, \sigma_P^I, \dots)\mu_{fric}(\sigma_P^I, \dots)\sigma_P^I \Delta \gamma^I \right]/2$$

DISTRIBUTE CONSTRAINT WEAR INCREMENT CONTRIBUTION TO NODES

$$\Delta W^K - \Delta W^K + \Delta W^I c_{IK}$$

STIFFNESS TERMS $K_{WW}$, $K_{UW}$, $K_{WU}$

205

206

END INCREMENT 208 ← YES — CONVERGED? — NO, i=i+1 — 207

OUTPUT WEAR RESULTS — 209

FIG. 2

FIG. 3

EP 4 535 217 A1

FIG. 4A

FIG. 4B

FIG. 4C

FIG. 4D

EP 4 535 217 A1

FIG. 4E

FIG. 5

FIG. 6

CWEAR, Magnitude 726

- 0.008
- 0.007
- 0.006
- 0.005
- 0.004
- 0.004
- 0.003
- 0.002
- 0.001
- 0.000

722a

722b

FIG. 7A

CWEAR, Magnitude 726

- 0.008
- 0.007
- 0.006
- 0.005
- 0.004
- 0.004
- 0.003
- 0.002
- 0.001
- 0.000

722a

722b

FIG. 7B

700a

700b

EP 4 535 217 A1

FIG. 7C

FIG. 7D

CWEAR, Magnitude 726

- 0.008
- 0.007
- 0.006
- 0.005
- 0.004
- 0.004
- 0.003
- 0.002
- 0.001
- 0.000

722a

722b

FIG. 7E

CWEAR, Magnitude 726

- 0.008
- 0.007
- 0.006
- 0.005
- 0.004
- 0.004
- 0.003
- 0.002
- 0.001
- 0.000

722a

722b

FIG. 7F

700e

700f

CWEAR, Magnitude 826

828h — 0.018
828g — 0.016
828f — 0.013
828e — 0.011
828d — 0.009
828c — 0.007
828b — 0.004
828a — 0.002
         0.000

824a

828h
828g
828f
828h
828g

828a 828b 828c 828d 828c 828b 828a 824b

FIG. 8

EP 4 535 217 A1

900

938

936

948

952

946

944

942

WEAR DISTANCE 932

WEAR COEFFICIENT 934

3E-9
2E-9
1E-9
0E+0

0    0.005    0.01    0.015    0.02    0.025    0.03    0.035    0.04

FIG. 9

FIG. 10

CWEAR, Magnitude 1026a

| 1028a5 | 0.018 |
| 1028a4 | 0.014 |
| 1028a3 | 0.011 |
| 1028a2 | 0.007 |
| 1028a1 | 0.004 |
| | 0.000 |

CWEAR, Magnitude 1026b

| 1028b5 | 0.008 |
| 1028b4 | 0.006 |
| 1028b3 | 0.005 |
| 1028b2 | 0.003 |
| 1028b1 | 0.002 |
| | 0.000 |

CWEAR, Magnitude 1126a

1128a5 — 0.033
1128a4 — 0.027
1128a3 — 0.020
1128a2 — 0.013
1128a1 — 0.007
— 0.000

1124a

1128a5
1128a4 1128a3
1128a5
1128a4

CWEAR, Magnitude 1126b

1128b5 — 0.006
1128b4 — 0.005
1128b3 — 0.003
1128b2 — 0.002
1128b1 — 0.001
— 0.000

1128b2
1128b1
1128b3
1128b4
1128b5
1128b3
1128b4
1128b2
1128b1
1124b

FIG. 11

1100

FIG. 12

CPRESS 1326a
1328a5 — 33.440
1328a4 — 26.752
1328a3 — 20.064
1328a2 — 13.376
        — 6.688
1328a1 — 0.000

1300a

1324a

1328a5
1328a4
1328a5

FIG. 13A

CPRESS 1326b
1328b5 — 31.543
1328b4 — 25.235
1328b3 — 18.926
1328b2 — 12.617
        — 6.309
1328b1 — 0.000

1300b

1324b

1328b5
1328b4
1328b5

FIG. 13B

FIG. 14

EP 4 535 217 A1

FIG. 15

1600

```
                                    ┌─────────────────────────────────────────────┐
                                    │   OBTAIN, IN MEMORY ASSOCIATED WITH A PROCESSOR, │── 1601
                                    │   A FINITE ELEMENT MESH REPRESENTING A FIRST OBJECT │
                                    └─────────────────────────────────────────────┘
```

OBTAIN, IN MEMORY ASSOCIATED WITH A PROCESSOR, A FINITE ELEMENT MESH REPRESENTING A FIRST OBJECT — 1601

FOR A GIVEN NODE OF THE OBTAINED FINITE ELEMENT MESH, ASSOCIATE A WEAR VARIABLE AND LINK THE ASSOCIATED WEAR VARIABLE TO A PLURALITY OF CONTACT CONSTRAINTS ASSOCIATED WITH THE GIVEN NODE — 1602

PERFORM A SIMULATION OF CONTACT, OVER A PLURALITY OF MOVEMENT INCREMENTS, BETWEEN THE FIRST OBJECT AND A SECOND OBJECT TO DETERMINE WEAR AT THE GIVEN NODE, PERFORMING THE SIMULATION INCLUDING: ITERATIVELY (i) DETERMINING WEAR DISTANCE FOR A GIVEN MOVEMENT INCREMENT USING THE FINITE ELEMENT MESH, THE ASSOCIATED WEAR VARIABLE, AND THE PLURALITY OF CONTACT CONSTRAINTS AND (ii) UPDATING A POSITION OF THE GIVEN NODE IN THE FINITE ELEMENT MESH BASED ON THE DETERMINED WEAR DISTANCE FOR THE GIVEN MOVEMENT INCREMENT, UNTIL THE WEAR DISTANCE FOR EACH OF THE PLURALITY OF MOVEMENT INCREMENTS IS DETERMINED; AND DETERMINING THE WEAR AT THE GIVEN NODE BASED ON THE DETERMINED WEAR DISTANCE FOR EACH OF THE PLURALITY OF MOVEMENT INCREMENTS — 1603

OUTPUT AN INDICATION OF THE DETERMINED WEAR — 1604

FIG. 16

FIG. 17

FIG. 18

**Europäisches Patentamt**
**European Patent Office**
**Office européen des brevets**

# EUROPEAN SEARCH REPORT

Application Number

EP 24 20 4862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUI LIANGJIN ET AL: "A simulation method of thermo-mechanical and tribological coupled analysis in dry sliding systems", TRIBOLOGY INTERNATIONAL, vol. 103, 23 June 2016 (2016-06-23), pages 121-131, XP029723414, ISSN: 0301-679X, DOI: 10.1016/J.TRIBOINT.2016.06.021 * abstract * * page 125, column 1, paragraph 1 - column 2, paragraph 1 * * page 126, column 2, paragraph 1-4 * * figures 1,2,6 * | 1-9 | INV. G06F30/23 G05B19/4065 G06F30/17 G06Q10/20 ADD. G06F119/04 G06T17/20 G06F111/04 G06F119/02 G06F119/14 G05B19/406 |
| X | CAVALIERI F J ET AL: "Three-dimensional numerical solution for wear prediction using a mortar contact algorithm", INTERNATIONAL JOURNAL OF NUMERICAL METHODS IN ENGINEERING, CHICHESTER, GB, vol. 96, no. 8, 14 August 2013 (2013-08-14), pages 467-486, XP071323027, ISSN: 0029-5981, DOI: 10.1002/NME.4556 * abstract * * page 472, last paragraph - page 475, last paragraph * * figures 9-14 * | 1-9 | |

-/--

| | | | TECHNICAL FIELDS SEARCHED (IPC) |
|---|---|---|---|
| | | | G06F G06T G05B G06Q |

The present search report has been drawn up for all claims

| Place of search | Date of completion of the search | Examiner |
|---|---|---|
| Munich | 7 February 2025 | Sohrt, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 24 20 4862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LUO LINHUI ET AL: "Number simulation analysis of self-lubricating joint bearing liner wear", INTERNATIONAL JOURNAL ON INTERACTIVE DESIGN AND MANUFACTURING (IJIDEM), SPRINGER PARIS, PARIS, vol. 13, no. 1, 23 March 2018 (2018-03-23), pages 23-34, XP036740046, ISSN: 1955-2513, DOI: 10.1007/S12008-018-0471-Y [retrieved on 2018-03-23] * abstract * * page 27, column 2, last paragraph - page 28, column 1, paragraph 1 * * page 28, column 1, paragraph 2 - page 30, column 2, paragraph 4 * * figures 3,6,7,10 * | 1-9 | |
| A | Puryear John ET AL: "Wear Analysis of Machinery Components in Buildings", 16th International LS-DYNA Users Conference, 11 June 2020 (2020-06-11), pages 1-11, XP093247817, Retrieved from the Internet: URL:https://www.dynalook.com/conferences/16th-international-ls-dyna-conference/implicit-t7-2/t7-2-b-implicit-051.pdf [retrieved on 2025-02-07] * abstract * * page 2, paragraph 1-2 * | 1-9 | TECHNICAL FIELDS SEARCHED (IPC) |

The present search report has been drawn up for all claims

| Place of search | Date of completion of the search | Examiner |
|---|---|---|
| Munich | 7 February 2025 | Sohrt, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                   

& : member of the same patent family, corresponding document

EPO FORM 1503 03.82 (P04C01)